# EUROPÄISCHE PATENTSCHRIFT

(11) **EP 2 543 549 B1**
(45) Veröffentlichungstag und Bekanntmachung des Hinweises auf die Patenterteilung: **03.09.2014**
(21) Anmeldenummer: 12004792.3
(22) Anmeldetag: 27.06.2012
(51) Int. Cl.: B60R 9/10

(54) **Lastenträgervorrichtung, vorzugsweise für einen Personenkraftwagen**
Load bearer, preferably for a passenger vehicle
Dispositif de support de charge, notamment pour un véhicule de transport de passagers

(30) Priorität: 07.07.2011 DE 102011106869
(43) Veröffentlichungstag der Anmeldung: 09.01.2013
(73) Patentinhaber: WESTFALIA - Automotive GmbH, 33378 Rheda-Wiedenbrück (DE)
(72) Erfinder: Recker, Andreas, 33602 Bielefeld (DE)
(74) Vertreter: Bregenzer, Michael

(56) Entgegenhaltungen:
- EP-A1- 0 636 515
- WO-A2-02/34569
- DE-A1- 10 122 560
- US-A- 4 804 120

## Beschreibung

Die Erfindung bezieht sich auf eine Lastenträgervorrichtung, vorzugsweise für einen Personenkraftwagen, die am Heck eines Aufbaus des Personenkraftwagens angeordnet oder anordnenbar ist, nach dem Oberbegriff des Patentanspruchs 1.

Eine Lastenträgervorrichtung gemäß dem Oberbegriff des Anspruchs 1 geht aus WO 02/34569 A2 oder DE 101 22 560 A1 hervor.

Es ist eine Vorrichtung zum lösbaren Befestigen eines Fahrradträgers im Heck eines Personenkraftwagens bekannt, DE 42 41 008 C2, welche Vorrichtung ein Traggestell für wenigstens ein quer zur Fahrtrichtung ausrichtbares Fahrrad besitzt. Das Traggestell umfasst aufrechte Halteträger und waagrechte Basisträger, welche Basisträger quer zur Fahrtrichtung verlaufen. Einer der Basisträger erstreckt sich mit definiertem Abstand zum Heck des Personenkraftwagens, und er ist mit Kupplungsrohren versehen. Die Kupplungsrohre sind beiderseits einer Mittellängsebene des Personenkraftwagens angeordnet und in Fahrzeuglängsrichtung ausgerichtet. Für die Kupplungsrohre sind am Personenkraftwagen Aufnahmerohre vorgesehen, in die die Kupplungsrohre eingeführt sind.

Die DE 101 22 560 B4 gibt einen Träger zur Befestigung am Heck von einem Kraftfahrzeug wieder, der mit fest an zur Montage einer Anhängekupplung vorgesehenen am Kraftfahrzeug angebrachten fahrzeugtypspezifischen Adaptern und mit Tragarmen versehen ist. Diese erstrecken sich von den Adaptern aus nach hinten, will heißen entgegen der Fahrtrichtung. Die Adapter sind mit aufrecht angeordneten Rohren versehen, und die Tragarme weisen aufrecht nach oben ragende Stifte auf. Diese Stifte wirken über einen Bajonettverschluss mit den Rohren zusammen, derart, dass die Tragarme in einer ersten Ausrichtung schräg zur Fahrzeuglängsachse, durch Einführen der aufrecht nach oben ragenden Stifte von unten in die Rohre mit den Adaptern verbunden werden. In einer zweiten Ausrichtung werden die Tragarme, etwa in Fahrzeuglängsrichtung nach hinten weisend, mit den Adaptern verriegelt.

Es ist Aufgabe der Erfindung eine Lastenträgervorrichtung, vorzugsweise für einen Personenkraftwagen so zu gestalten, dass sie außerhalb eines Aufbaus des Personenkraftwagens zum Transport mobiler Gegenstände unter anderem von Gepäck, Zweiradfahrzeugen oder dgl. geeignet ist und sich durch übersichtliche Bauweise sowie leichte Realisierbarkeit auszeichnet. Dabei sollte aber auch sichergestellt sein, dass die Lastenträgervorrichtung bezüglich Gewicht und Festigkeit optimiert ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass jedes der beiden Trägersysteme der Lastenträgervorrichtung an einem ersten Endbereich einen musterhaften Zusammenbau, bestehend aus der Halteinrichtung und der Aufnahme, besitzt. Dabei ist der Zusammenbau vorteilhaft durch eine Verriegelungseinrichtung in axialer Richtung lagegesichert.

Die Aufnahme kann beispielsweise eine Aufnahmehülse oder ein Aufnahmerohr umfassen, das am Personenkraftfahrzeug zumindest bei Gebrauch des Lastenträgers befestigt ist.

Die Aufnahme kann beispielsweise einen integralen Bestandteil einer Karosserie des Kraftfahrzeugs bilden. Die Aufnahme kann aber auch ein Bauteil sein, das an der Karosserie des Kraftfahrzeugs, die man auch als einen Aufbau bezeichnen kann, lösbar anordenbar ist, zum Beispiel angeschraubt sein kann. Eine weitere Ausführungsform sieht vor, dass die Aufnahme am Aufbau des Kraftfahrzeugs mittels einer Klebeverbindung, einer Schweißverbindung oder dergleichen, befestigt ist.

Jedenfalls eignet sich das erfindungsgemäße Lastenträgersystem vorzugsweise auch für Nachrüstungen, d.h. dass beispielsweise ein bereits vorhandenes Personenkraftfahrzeug mit einer Aufnahme für das Trägersystem versehen werden kann. Die Aufnahme umfasst beispielsweise einen Montageflansch, einen Haltevorsprung, Bohrungen oder dergleichen andere Befestigungsmittel zur Montage am Kraftfahrzeug.

Die Verbindungseinheit umfasst vorzugsweise eine Steckverbindungsanordnung zur Herstellung einer Steckverbindung zwischen einerseits dem Trägersystemen bzw. den beiden Armen des Trägerssystems, und andererseits dem Querträger bzw. einem Gestell des Lastenträgers. Beispielsweise sind an dem Querträger oder dem Heckträger Steckvorsprünge vorgesehen, die in korrespondierende Steckaufnahmen an dem Trägersystem, das die Verbindung zum Personenkraftwagen herstellt, einsteckbar sind. Aber auch das umgekehrte ist möglich, dass beispielsweise ein Steckvorsprung am Trägersystem in eine Steckaufnahme am Querträger oder Heck-Lastenträger eingreift.

An dieser Stelle sei bemerkt, dass der Querträger vorzugsweise einen Bestandteil eines Gestells des Heckträgers bildet.

Hinzu kommt die Verbindungseinheit am zweiten Endbereich des Trägersystems, die vorbildlich mit einem Querträger eines Heckträgers für Gepäck, Zweiradfahrzeugen oder dgl. zusammensetzbar ist, welcher Querträger funktionsgerecht die beiden gegenüberliegenden zweiten Endbereiche der Trägersysteme der Lastenträgervorrichtung baulich vereinigt.

Die das Trägersystem darstellende Baueinheit, vorzugsweise gebildet durch einen ersten aufrechten Abschnitt, einen zweiten aufrechten Abschnitt und einen dritten liegenden Abschnitt, ermöglicht baulichen Gegebenheiten am Aufbau und der Lastenträgervorrichtung bzw. dem Heckträger Rechnung zu tragen.

Dafür eignet sich vorteilhaft eine aus einem Stück hergestellte aufwandsarme Baueinheit, die bei niedrigem Gewicht über eine hohe Festigkeit verfügt, vorzugsweise dann, wenn besagte Baueinheit ein metallischer Eisen- oder Leichtmetall-Rohrkörper mit kreisförmigem, elliptischem oder vieleckigem Querschnitt ist.

Beispiel gebend ist die Verbindungseinheit, die ein etwa horizontal vom zweiten Abschnitt des Rohrkörpers weggeführtes Stützelement aufweist, das mit einem U-förmigen Querschnitt einen korrespondierenden Tragabschnitt des Querträgers formschlüssig umgreift.

Eine sichere Verbindung zwischen dem Stützelement und dem Tragabschnitt wird vorteilhaft erreicht, wenn eine manuell bedienbare bspw. ein Handrad aufweisend Halteschraube wirksam ist.

Dies wird vorteilhaft dadurch unterstützt, dass die Schraube einerseits in ein Gewinde in einem aufrechten Schenkel des Stützelements hineingedreht ist und andererseits mit einem Gewindezapfen gegen einen Wandabschnitt des Querträgers gespannt wird.

Erfindungsgemäß ist vorgesehen, dass der Querträger und die Verbindungseinheit anhand einer Verriegelungseinrichtung verschließbar sind, wenn die beiden Komponenten miteinander verbunden sind. Somit sichert sozusagen der Querträger und mithin der Lastenträger das Trägersystem oder die Trägersysteme. Das Trägersystem ist vorzugsweise im verschlossenen Zustand nicht mehr vom Heck des Personenkraftwagens entfernbar.

Die Verriegelungseinrichtung umfasst ein Schloss oder eine Schlossanordnung.

Die Verriegelungseinrichtung umfasst zum Beispiel ein Schloss in einem Handrad. Mit dem Handrad ist beispielsweise ein Befestigungsbolzen der Verbindungseinheit betätigbar.

Es versteht sich, dass auch an einer anderen Stelle ein Schloss vorgesehen sein kann. Beispielsweise kann eine Schraube der Verbindungseinheit mittels eines abschließbaren Riegels gesichert werden. Wenn die Schraube in den Querträger eingeschraubt ist, erstreckt sich der Riegel oberhalb des Kopfes der Schraube, so dass diese nicht mehr betätigbar ist. Der Riegel seinerseits kann mit dem Schloss verschließbar sein, wodurch die gesamte Baueinheit gesichert ist und der Lastenträger nicht mehr vom Kraftfahrzeug entfernbar ist.

Schließlich werden vorteilhaft konstruktive Maßstäbe gesetzt, wenn die rohrförmige Aufnahme an einer Lagerkonsole befestigt ist, die unter Vermittlung von Schrauben mit einer Trägerstruktur einer Bodengruppe des Aufbaus verbunden ist.

In der Zeichnung wird ein Ausführungsbeispiel der Erfindung gezeigt, das nachstehend näher erläutert wird.

Es zeigen
- Fig. 1: eine Schrägansicht von hinten links auf einen Personenkraftwagen mit einer Lastenträgervorrichtung und Stoßfänger, der in einen lediglich bruchstückhaft dargestellten Aufbau eingesetzt ist,
- Fig. 2: ein Trägersystem der Lastenträgervorrichtung, das mit einem ersten Endbereich an einer Trägerstruktur einer Bodengruppe des Aufbaus in Lage gehalten wird,
- Fig. 3: eine Einzelheit X des Trägersystems nach Fig. 2, in größerem Maßstab,
- Fig. 4: eine Einzelheit Y der Fig. 2 in größerem Maßstab,
- Fig. 5: eine schematische Einzelheit Z der Fig. 2.

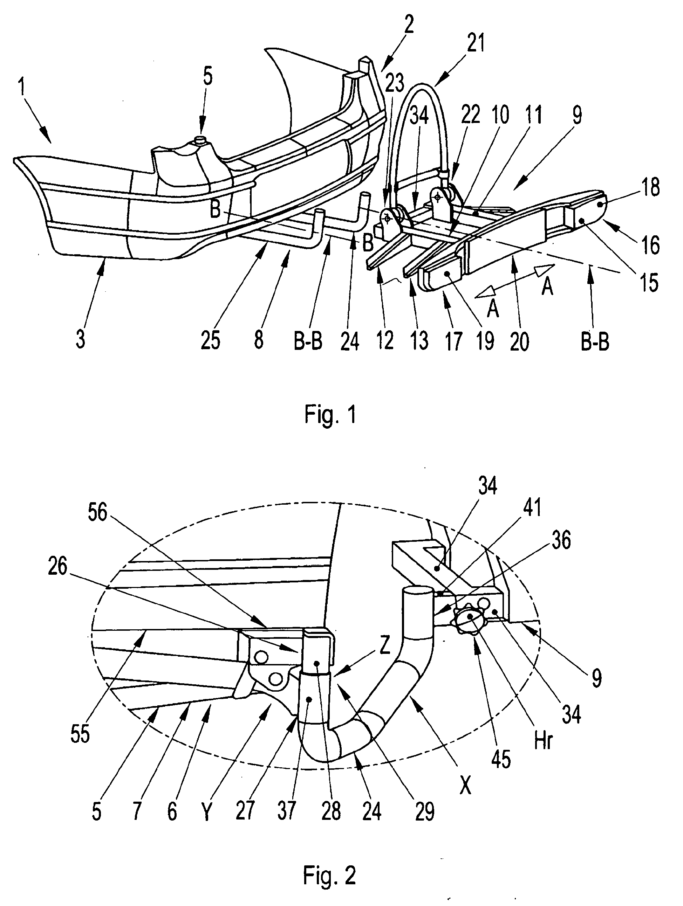

Von einem Personenkraftwagen 1 -Fig. 1- ist lediglich ein Heck 2 mit einem Stoßfänger 3 dargestellt, der sich über eine wesentliche Breite des Personenkraftwagens 1 erstreckt. Der Stoßfänger 3 ist in einen Aufbau 5 eingesetzt, der lediglich bruchstückhaft wiedergegeben wird und gemäß Fig. 2 eine Bodengruppe 6 mit einer Trägerstruktur 7 umfasst. An der Bodengruppe 6 bzw. der Trägerstruktur 7 gehalten ist eine Lastenträgervorrichtung 8 für einen Heckträger 9, der zur Aufnahme transportabler Gegenstände wie Gepäck, Zweiradfahrzeuge oder dgl. geeignet ist. Im Ausführungsbeispiel weist der Heckträger 9 an Längsträgern 10 und 11 beweglich gehaltene, quer zur Fahrzeuglängsrichtung A-A verlaufende Radstützen 12 und 13 für Zweiradfahrzeuge auf. In einem rückwärtigen Bereich 14 der Längsträger 10 und 11 ist ein Abschlussquerträger 15 angeordnet, der an Außenseiten 16 und 17 d.h. symmetrisch beabstandet zu einer Mittellängsebene B-B des Personenkraftwagens 1 Leuchtenkörper 18 und 19 trägt. Die Letzteren begrenzen einen aufrecht stehenden Kennzeichenträger 20. Darüber hinaus ist der Heckträger 9 mit einem aufrechten Stützrahmen 21 z.B. für ein Zweiradfahrzeug versehen, der wie die Radstützen 12 und 13 bei 22 und 23 klappbar ausgeführt ist, und zwar in der Weise, dass der Heckträger 9 paketartig zusammenlegbar ist.

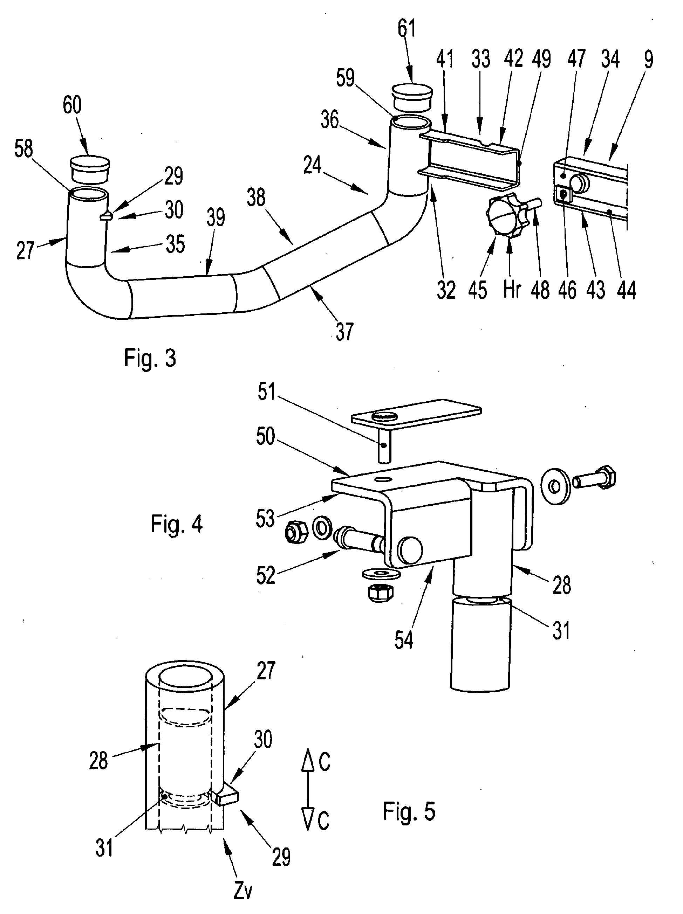

Die Lastenträgervorrichtung 8 weist beiderseits der Mittellängsebene B-B Trägersystem 24 und 25 auf, wovon jedes bspw. Trägersystem 24 -Fig. 2 und 3- an einem dem Aufbau 5 zugekehrten ersten Endbereich 26 eine aufrechte rohrartige Halteeinrichtung 27 z.B. mit kreisförmigem Querschnitt aufweist, die mit einer festen, korrespondierenden bspw. zylinderförmigen Aufnahme 28 teleskopartig zusammenführbar ist. Zur Lagesicherung der Halteeinrichtung 27 relativ zu der Aufnahme 28 dient eine Verriegelungseinrichtung 29 -Fig. 5-, die im Ausführungsbeispiel eine beweglich an der Halteeinrichtung 27 angebrachte Sicherungsfalle 30 besitzt, welche Sicherungsfalle 30 im verriegelten Zustand in eine Art Ringnut 31 in der Aufnahme 28 eingreift, wodurch die Halteeinrichtung 27 in axialer Richtung C-C relativ zu der Aufnahme 28 gesichert ist. Anstelle der Verriegelungseinrichtung 29 kann auch ein Bajonettverschluss eingesetzt werden, bei dem dann durch Verdrehen der Halteeinrichtung 27 mit Bezug auf die Aufnahme 28 das Trägersystem 24 festsetzbar ist.

An einem zweiten Endbereich 32 umfasst das Trägersystem 24 - Fig. 3- eine Verbindungseinheit 33, die mit einem Querträger 34 des Heckträgers 9 zusammensetzbar ist. Der Querträger 34 ist zwischen den gegenüberliegenden Trägersystemen 24 und 25 wirksam, d.h. der Querträger 34 verbindet die Trägersysteme 24 und 25 miteinander. Das Trägersystem 24 ist mit einem ersten aufrechten Abschnitt 35 für die Halteinrichtung 27 und einem zweiten aufrechten Abschnitt 36 für die Verbindungseinheit 33 versehen, wobei sich zwischen dem ersten Abschnitt 35 und dem zweiten Abschnitt 36 ein liegender oder etwa horizontaler Abschnitt 37 erstreckt. Die Abschnitte 35, 36 und 37 bilden eine aus einem Stück hergestellte Baueinheit 38, die durch einen Rohrkörper 39 mit kreisförmigem, elliptischem oder vieleckigem Querschnitt gebildet wird.

Die Verbindungseinheit 33 weist benachbart dem oberen Endbereich 32 des zweiten Abschnitts 36 ein etwa horizontal von letzterem weggeführtes Stützelement 41 auf -Fig. 3-, dessen U-förmiger Querschnitt 42 von einem korrespondierenden Querschnitt 43 eines Tragabschnitts 44 des Querträgers 34 formschlüssig umgeben wird. Zwischen dem Stützelement 41 und dem Tragabschnitt 44 ist eine manuell bedienbare bspw. ein Handrad Hr aufweisende Halteschraube 45 wirksam, die einerseits in ein Gewinde 46 in einer aufrechten Wand 47 des Querträgers 34 hineingedreht ist und andererseits mit einem Gewindezapfen 48 gegen eine aufrechte Stegwand 49 des Stützelements 41 gespannt ist, um Querträger 42 und Stützelement 41 fest miteinander fest zu verbinden. Um den Heckträger 9 gegen unsachgemäße Behandlung und/oder Diebstahl zu sichern ist zwischen Trägersystem 24 bzw. die Verbindungseinheit 33 und dem Querträger 34 des Heckträgers 9 eine abschließbare verriegelungseinrichtung vorgesehen. Letztere umfasst ein mit einem Schlüssel eines Berechtigten bedienbares Schloss.

In Fig. 4 wird gezeigt, dass die zylinderische Aufnahme 28 an einer Lagerkonsole 50 befestigt ist, die wiederum unter Vermittlung von Schrauben 51 und 52 mit der Trägerstruktur 7 der Bodengruppe 6 des Aufbaus 5 in Lage gehalten wird. Die Lagerkonsole 50 besitzt im Querschnitt winkelförmig zueinander ausgerichtet Schenkel 53 und 54. Dabei ist ein horizontaler Schenkel 53 und ein aufrechter Schenkel 54 an Wandabschnitten 55 und 56 der Trägerstruktur 7 der Bodengruppe 6 befestigt - Fig.2-. Schließlich sind in den Enden 58 und 59 der ersten und zweiten Abschnitte 35 und 36 des Rohrkörpers 39 des Tragsystems 24 Verschlusseinsätze 60 und 61 eingesetzt -Fig. 3-.

## Patentansprüche

1. Lastenträgervorrichtung, vorzugsweise für einen Personenkraftwagen, die am Heck eines Aufbaus des Personenkraftwagens angeordnet oder anordenbar ist und beiderseits einer Mittellängsebene des Aufbaus sich in Fahrzeuglängsrichtung erstreckende Trägersysteme (24; 25) aufweist, wovon jedes Trägersystem (24; 25) an einem dem Aufbau zugekehrten ersten Endbereich (26) eine aufrechte zylinderartige Halteeinrichtung (27) aufweist, die mit einer korrespondierenden am Personenkraftwagen angeordneten oder anordenbaren Aufnahme (28) zusammenführbar und relativ zu der Aufnahme (28) festsetzbar ist, dergestalt, dass die Halteinrichtung und die Aufnahme (28) einen lagegesicherten Zusammenbau darstellen, wobei das Trägersystem (24; 25) an einem zweiten Endbereich (32) eine Verbindungseinheit (33) umfasst, die, nachdem die Halteeinrichtungen (27) der Trägersysteme (24; 25) an den Aufnahmen (28) festgesetzt sind, mit einem Querträger (34) eines Heckträgers (9) baulich zusammensetzbar ist, welcher Querträger (34) sich zwischen den gegenüberliegenden Trägersystemen (24 und 25) erstreckt, **dadurch gekennzeichnet, dass** der Heckträger (9) über den Querträger (34) bzw. die Verbindungseinheit (33) des Trägersystems (24, 25) mittels einer abschließbaren Verriegelungseinrichtung gesichert ist, und wobei die Verriegelungseinrichtung ein Schloss oder eine Schlossanordnung umfasst.

2. Lastenträgervorrichtung nach Anspruch 1, **dadurch gekennzeichnet, dass** das Trägersystem (24, 25) einen ersten aufrechten Abschnitt (35) für die Halteinrichtung (27) und einen zweiten aufrechten Abschnitt (36) für die Verbindungseinheit (33) besitzt.

3. Lastenträgervorrichtung nach Anspruch 2, **dadurch gekennzeichnet, dass** zwischen erstem Abschnitt (35) und zweitem Abschnitt (36) ein dritter liegender Abschnitt (37) sich erstreckt.

4. Lastenträgervorrichtung nach den Ansprüchen 2 oder 3, **dadurch gekennzeichnet, dass** der erste Abschnitt (35), der zweite Abschnitt (36) und der dritte Abschnitt (37) eine aus einem Stück hergestellte Baueinheit (38) bilden.

5. Lastenträgervorrichtung nach Anspruch 4, **dadurch gekennzeichnet, dass** die Baueinheit (38) durch einen Rohrkörper (39) mit kreisförmigem, elliptischen oder vieleckigen Querschnitt gebildet wird.

6. Lastenträgervorrichtung nach einem der vorhergehenden Ansprüche, **dadurch gekennzeichnet, dass** die Verbindungseinheit (33) ein etwa horizontal vom zweiten Abschnitt (36) des Trägersystems (24; 25) weggeführtes Stützelement (41) aufweist, das mit einem U-förmigen Querschnitt (42) einen korrespondierenden z.B. rohrförmigen Tragabschnitt (44) des Querträgers (34) formschlüssig umgreift.

7. Lastenträgervorrichtung nach Anspruch 6, **dadurch gekennzeichnet, dass** zwischen dem Stützelement (41) und dem Tragabschnitt (44) des Querträgers (34) eine manuell bedienbare bspw. ein Handrad (Hr) aufweisende Halteschraube (45) wirksam ist, die einerseits in ein Gewinde (46) in eine aufrechte Wand (47) des Stützelementes (41) und andererseits mit einen Gewindezapfen (48) gegen eine Stegwand (49) des Stützelements (41) gespannt wird.

8. Lastenträgervorrichtung nach einem der vorhergehenden Ansprüche, **dadurch gekennzeichnet, dass** die Verriegelungseinrichtung ein Schloss in einem Handrad (Hr) und/oder ein Schloss zum Abschließen eines Riegels umfasst.

9. Lastenträgervorrichtung nach Anspruch 1, **dadurch gekennzeichnet, dass** die insbesondere zylinderförmige Aufnahme (28) an einer Lagerkonsole (50) befestigt ist, die unter Vermittlung von Schrauben (51 und 52) mit einer Trägerstruktur (7) einer Bodengruppe (6) des Aufbaus (5) verbunden oder verbindbar ist.

10. Lastenträgervorrichtung nach Anspruch 9, **dadurch gekennzeichnet, dass** die Lagerkonsole (50) im Querschnitt winkelförmig zueinander verlaufende Schenkel (53 und 54) besitzt, wobei ein horizontaler Schenkel (53) und ein aufrechter Schenkel (54) mit Wandabschnitten (55 und 56) der Trägerstruktur (7) verbunden sind.

11. Lastenträgervorrichtung nach einem der vorhergehenden Ansprüche, **dadurch gekennzeichnet, dass** in Enden (58 und 59) der ersten und zweiten Abschnitte (35) des Tragsystems (24; 25) Verschlusseinsätze (60 und 61) eingebracht sind.

12. Lastenträgervorrichtung nach einem der vorhergehenden Ansprüche, **dadurch gekennzeichnet, dass** der Querträger (34) des Heckträgers (9) einen Bestandteil eines Tragegestells bildet.

13. Lastenträgervorrichtung nach einem der vorhergehenden Ansprüche, **dadurch gekennzeichnet, dass** es zwei Trägersysteme (24, 25) umfasst, die im am Personenkraftwagen montierten Zustand im wesentlichen in Fahrzeuglängsrichtung verlaufen.

14. Lastenträgervorrichtung nach einem der vorhergehenden Ansprüche, **dadurch gekennzeichnet, dass** an der zur Befestigung am Personenkraftwagen vorgesehenen Aufnahme (28) Montagemittel, insbesondere ein Befestigungsflansch, vorgesehen sind und/oder dass die Aufnahme (28) eine Aufnahmehülse oder ein Aufnahmerohr umfasst.

## Claims

1. Load carrier unit, preferably for a car, which is or may be fitted to the rear of a body of the car and has carrier systems (24; 25) extending either side of a centre longitudinal plane of the body in the axial direction of the vehicle, and with each carrier system (24; 25) having at a first end section (26) facing the body an upright cylinder-like holding fixture (27) which may be guided together with a corresponding socket (28) which is or may be fitted to the car and which may be fixed relative to the socket (28) in such a way that the holding fixture and the socket (28) represent a securely located assembly, wherein the carrier system (24; 25) includes at a second end section (32) a connection unit (33) which, after the holding fixtures (27) of the carrier systems (24; 25) are fixed to the sockets (28), may be structurally combined with a cross-member (34) of a rear carrier (9), with this cross-member (34) extending between the opposite carrier systems (24; 25), **characterised in that** the rear carrier (9) is secured above the cross-member (34) and the connection unit (33) of the carrier system (24; 25) by means of a closable locking device, and wherein the locking device comprises a lock or a lock assembly.

2. Load carrier unit according to claim 1, **characterised in that** the carrier system (24; 25) has a first upright section (35) for the holding fixture (27) and a second upright section (36) for the connection unit (33).

3. Load carrier unit according to claim 2, **characterised in that** a third horizontal section (37) extends between the first section (35) and the second section (36).

4. Load carrier unit according to claims 2 or 3, **characterised in that** the first section (35), the second section (36) and the third section (37) form a single-piece unit (38).

5. Load carrier unit according to claim 4, **characterised in that** the unit (38) is formed by a tubular body (39) with circular, elliptical or rectangular cross-section.

6. Load carrier unit according to any of the preceding claims, **characterised in that** the connection unit (33) has a roughly horizontal support element (41) guided away from the second section (36) of the carrier system (24; 25) and which, with a U-shaped cross-section (42), positively encompasses a corresponding, e.g. tubular, carrying section (44) of the cross-member (34).

7. Load carrier unit according to claim 6, **characterised in that** a manually operable retaining bolt (45), for example having a hand wheel (Hr), is effective between the support element (41) and the carrying section (44) of the cross-member (34), and is clamped at one end in a thread (46) in an upright wall (47) of the support element (41) and at the other end by a threaded stem (48) against a web wall (49) of the support element (41).

8. Load carrier unit according to any of the preceding claims, **characterised in that** the locking device comprises a lock in a hand wheel (Hr) and/or a lock for locking a bolt.

9. Load carrier unit according to claim 1, **characterised in that** the socket (28), in particular cylindrical, is fastened to a bearing bracket (50) which, through the agency of bolts (51 and 52) is or may be connected to a carrying structure (7) of a base assembly (6) of the body (5).

10. Load carrier unit according to claim 9, **characterised in that** the bearing bracket (50) has legs (53 and 54) running in cross-section at an angle to one another, wherein a horizontal leg (53) and an upright leg (54) are connected by wall sections (55 and 56) of the carrying structure (7).

11. Load carrier unit according to any of the preceding claims, **characterised in that** fastening inserts (60 and 61) are provided in ends (58 and 59) of the first and second sections (35) of the carrier system (24; 25).

12. Load carrier unit according to any of the preceding claims, **characterised in that** the cross-member (34) of the rear carrier (9) is part of a support frame.

13. Load carrier unit according to any of the preceding claims, **characterised in that** it includes two carrier systems (24; 25), running substantially in the axial direction of the vehicle when fitted to the car.

14. Load carrier unit according to any of the preceding claims, **characterised in that** mounting means, in particular a mounting flange, are provided on the socket (28) provided for fastening to the car, and/or that the socket (28) comprises a locating sleeve or a locating tube.

## Revendications

1. Dispositif de support de charge, de préférence pour un véhicule automobile de transport de passagers, qui est ou peut être disposé sur la partie arrière d'une carrosserie du véhicule automobile de transport de passagers et présente des systèmes porteurs (24 ; 25) s'étendant de part et d'autre d'un plan médian longitudinal de la carrosserie dans le sens longitudinal de véhicule, dont chaque système porteur (24 ; 25) présente, sur une première zone d'extrémité (26) tournée vers la carrosserie, un dispositif de retenue (27) vertical cylindrique qui peut être réuni avec un logement (28) correspondant disposé ou pouvant être disposé sur le véhicule automobile de transport de passagers et peut être fixé par rapport au logement (28) de telle manière que le dispositif de retenue et le logement (28) constituent un assemblage assujetti en position, le système porteur (24 ; 25) comportant, sur une seconde zone d'extrémité (32), une unité de liaison (33) qui peut être réunie structurellement après la fixation des dispositifs de retenue (27) des systèmes porteurs (24 ; 25) sur les logements (28), avec une traverse (34) d'un support de partie arrière (9), laquelle traverse (34) s'étend entre les systèmes porteurs (24 et 25) opposés, **caractérisé en ce que** le support de partie arrière (9) est bloqué sur la traverse (34) ou l'unité de liaison (33) du système porteur (24, 25) à l'aide d'un dispositif de verrouillage pouvant être fermé, et le dispositif de verrouillage comportant une serrure ou un ensemble de serrure.

2. Dispositif de support de charge selon la revendication 1, **caractérisé en ce que** le système porteur (24, 25) possède une première section verticale (35) pour le dispositif de retenue (27) et une seconde section verticale (36) pour l'unité de liaison (33).

3. Dispositif de support de charge selon la revendication 2, **caractérisé en ce qu'**une troisième section horizontale (37) s'étend entre la première section (35) et la seconde section (36).

4. Dispositif de support de charge selon la revendication 2 ou 3, **caractérisé en ce que** la première section (35), la seconde section (36) et la troisième section (37) forment une unité structurelle fabriquée d'un seul tenant (38).

5. Dispositif de support de charge selon la revendication 4, **caractérisé en ce que** l'unité structurelle (38) est formée par un corps tubulaire (39) avec une section transversale circulaire, elliptique ou polygonale.

6. Dispositif de support de charge selon l'une quelconque des revendications précédentes, **caractérisé en ce que** l'unité de liaison (33) présente un élément d'appui (41) éloigné à peu près horizontalement de la seconde section (36) du système porteur (24 ; 25), lequel élément entoure à complémentarité de formes avec une section transversale (42) en U une section porteuse (44) correspondante par exemple tubulaire de la traverse (34).

7. Dispositif de support de charge selon la revendication 6, **caractérisé en ce qu'**une vis de retenue (45) manipulable manuellement, présentant par exemple un volant (Hr) est active entre l'élément d'appui (41) et la section porteuse (44) de la traverse (34), laquelle vis est serrée d'une part dans un filet (46) dans une paroi verticale (47) de l'élément d'appui (41) et d'autre part avec une goupille filetée (48) contre une paroi de nervure (49) de l'élément d'appui (41).

8. Dispositif de support de charge selon l'une quelconque des revendications précédentes, **caractérisé en ce que** le dispositif de verrouillage comporte une serrure dans un volant (Hr) et/ou une serrure pour fermer un verrou.

9. Dispositif de support de charge selon la revendication 1, **caractérisé en ce que** le logement (28) notamment cylindrique est fixé sur une console d'appui (50) qui est ou peut être reliée par l'intermédiaire de vis (51 et 52) à une structure porteuse (7) d'un dessous de caisse (6) de la carrosserie (5).

10. Dispositif de support de charge selon la revendication 9, **caractérisé en ce que** la console d'appui (50) possède des branches (53 et 54) s'étendant angulairement l'une à l'autre en section transversale, une branche horizontale (53) et une branche verticale (54) étant reliées à des sections de paroi (55 et 56) de la structure porteuse (7).

11. Dispositif de support de charge selon l'une quelconque des revendications précédentes, **caractérisé en ce que** des inserts de fermeture (60 et 61) sont introduits dans des extrémités (58 et 59) des première et seconde sections (35) du système porteur (24 ; 25).

12. Dispositif de support de charge selon l'une quelconque des revendications précédentes, **caractérisé en ce que** la traverse (34) du support de partie arrière (9) forme un constituant d'un bâti porteur.

13. Dispositif de support de charge selon l'une quelconque des revendications précédentes, **caractérisé en ce qu'**il comporte deux systèmes porteurs (24, 25) qui s'étendent dans l'état monté sur le véhicule automobile de transport de passagers sensiblement dans le sens longitudinal du véhicule.

14. Dispositif de support de charge selon l'une quelconque des revendications précédentes, **caractérisé en ce que** des moyens de montage, en particulier une bride de fixation, sont prévus sur le logement (28) prévu pour la fixation sur le véhicule automobile de transport de passagers et/ou **en ce que** le logement (28) comporte une douille de réception ou un tube de réception.
